# EUROPEAN PATENT APPLICATION

(11) **EP 4 821 588 A1**
(43) Date of publication of application: **14.10.2026**
(21) Application number: 24898969.1
(22) Date of filing: 05.11.2024
(51) Int. Cl.: B01F 27/072, B01F 27/112, B01F 27/191, B01F 27/90, C08G 18/00

(54) **STIRRING DEVICE AND STIRRING METHOD**

(30) Priority: 04.12.2023 JP 2023204446
(71) Applicant: Sumitomo Heavy Industries Process Equipment Co., Ltd., Saijo-shi, Ehime 799-1393 (JP)
(72) Inventor: BANDO Yuma, Saijo-shi Ehime 799-1393 (JP); HORIGUCHI Hiroo, Saijo-shi Ehime 799-1393 (JP); TAKENAKA Katsuhide, Saijo-shi Ehime 799-1393 (JP)
(74) Representative: Louis Pöhlau Lohrentz
(86) International application number: PCT/JP2024/039203
(87) International publication number: WO 2025/121049

(57) **Abstract**

A stirring device 1 includes a stirring impeller 3 that is rotated to stir a fluid to be stirred which is accommodated in a stirring tank 2. The stirring impeller 3 includes a plurality of blade portions 31A to 31D that are disposed apart from each other in a height direction of the stirring tank 2. The blade portions 31A to 31D include blades 33A to 33D that are rotated to generate a flow of the fluid to be stirred having a height direction component of the stirring tank 2, respectively. Dimensions of the blades 33A to 33D in the height direction are larger or smaller in the blade portions 31A to 31D that are closer to a bottom portion 22 of the stirring tank 2. The blades 33A to 33D in the respective blade portions 31A to 31D are rotated to generate a flow of the fluid to be stirred having a height direction component directed toward the bottom portion 22 of the stirring tank 2, and the dimensions of the blades 33A to 33D in the height direction are larger in the blade portions 31A to 31D that are closer to the bottom portion 22 of the stirring tank 2.

## Description

### Technical Field

The present disclosure relates to a stirring device and the like.

### Background Art

PTL 1 discloses a stirring device that generates a latex (also referred to as an emulsion) in which polymer (high-molecular-weight) particles have been dispersed in a medium, such as water, using a polymerization reaction of a monomer in a stirring tank.

### Citation List

### Patent Literature

[PTL 1] Japanese Unexamined Patent Publication No. H10-33966

### Summary of Invention

### Technical Problem

In order to efficiently dissipate the heat of reaction in a polymerization reaction (hereinafter, also referred to as the heat of polymerization) outside a stirring tank, for example, a stirring tank in which a ratio of a liquid level height L of a fluid to be stirred to a tank diameter D of the stirring tank is significantly greater than 1 is often used. In order to effectively stir the fluid to be stirred in the vertically long stirring tank, PTL 1 proposes the use of a stirring impeller having a special shape.

The present disclosure has been made in view of such circumstances, and an object of the present disclosure is to provide a stirring device and the like that can effectively stir a fluid to be stirred in a stirring tank without using a stirring impeller having a special shape.

### Solution to Problem

In order to solve the above-described problem, according to an aspect of the present invention, there is provided a stirring device including a stirring impeller that is rotated to stir a fluid to be stirred which is accommodated in a stirring tank. The stirring impeller includes a plurality of blade portions that are disposed apart from each other in a height direction of the stirring tank. Each of the blade portions includes a blade that is rotated to generate a flow of the fluid to be stirred having a height direction component of the stirring tank. A dimension of the blade in the height direction is larger or smaller in the blade portion that is closer to a bottom portion of the stirring tank.

When the dimensions of the blades in the height direction in the multi-stage blade portions that are disposed apart from each other in the height direction of the stirring tank are equal to each other, for example, upward and downward flows between two blade portions adjacent to each other in the height direction collide with each other to form a flow barrier, which results in the deterioration of the overall stirring performance of the stirring tank, which will be described in detail below. In contrast, according to the present aspect, the dimension of the blade, which is closer to the bottom portion of the stirring tank, in the height direction is larger or smaller, that is, the dimension of the blade in the height direction monotonically increases or decreases along the height direction to improve the overall stirring performance of the stirring tank.

According to another aspect of the present invention, there is provided a stirring method. This method is a stirring method in a stirring device including a stirring impeller that is rotated to stir a fluid to be stirred which is accommodated in a stirring tank. The stirring impeller includes a plurality of blade portions that are disposed apart from each other in a height direction of the stirring tank, and the blade portion closer to a bottom portion of the stirring tank includes a blade having a larger or smaller dimension in the height direction. The stirring method includes rotating each of the blades to generate a flow of the fluid to be stirred having a height direction component of the stirring tank.

Further, any combination of the above-described components, and any transformation of these expressions into a method, a device, a system, a recording medium, a computer program, and the like are also included in the present disclosure.

### Advantageous Effects of Invention

According to the present disclosure, it is possible to effectively stir the fluid to be stirred in the stirring tank without using a stirring impeller having a special shape.

### Brief Description of Drawings

FIG. 1 schematically shows a configuration of a stirring device according to a first embodiment.
FIG. 2 shows a comparative example of the stirring device shown in FIG. 1.
FIG. 3 shows a flow pattern of the first embodiment.
FIG. 4 shows a flow pattern of the comparative example.
FIG. 5 schematically shows a configuration of a stirring device according to a modification example of the first embodiment.

### Description of Embodiments

Hereinafter, an aspect for carrying out the present disclosure (hereinafter, also referred to as an embodiment) will be described in detail with reference to the drawings. In the description and/or drawings, the same or equivalent components, members, processes, and the like are denoted by the same reference numerals, and a redundant description thereof will be omitted. The scale and shape of each portion shown in the drawings are set for convenience in order to simplify the description and are not limitedly interpreted unless otherwise specified. The embodiment is merely an example and does not limit the scope of the present disclosure in any way. All the features and combinations thereof described in the embodiment are not necessarily essential to the present disclosure.

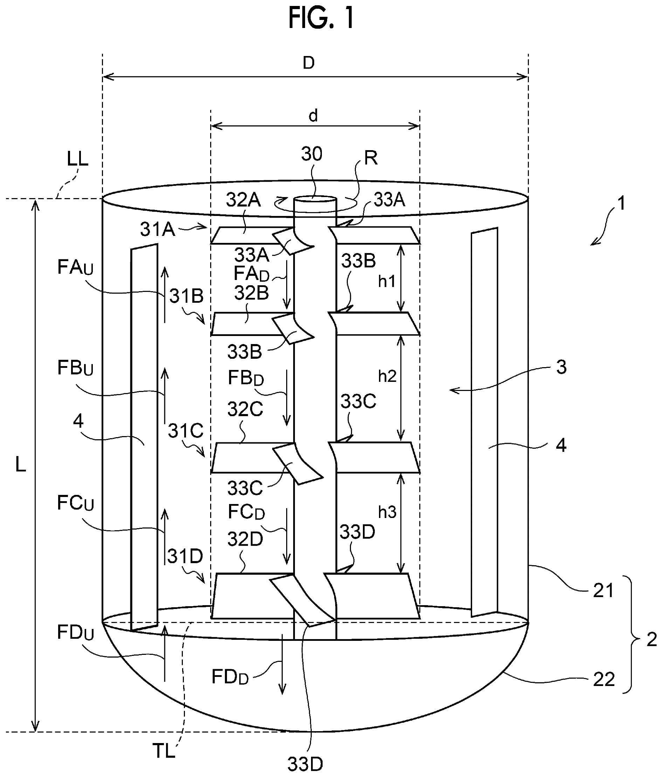

FIG. 1 schematically shows a configuration of a stirring device 1 according to a first embodiment of the present disclosure. In the present embodiment, the stirring device 1 is installed in a vertical direction, which is an up-down direction, a longitudinal direction, and a height direction, in FIG. 1. The up-down direction, the longitudinal direction, the height direction, and the vertical direction are used synonymously, and a left-right direction, a lateral direction, and a horizontal direction are used synonymously. The present disclosure can also be applied to the stirring device 1 that is not installed in the vertical direction. In this case, the up-down direction, the longitudinal direction, and the height direction are different from the vertical direction, and the left-right direction and the lateral direction are different from the horizontal direction. In addition, since a rotary shaft 30 of a stirring impeller 3 is provided in the up-down direction, the longitudinal direction, the height direction, or the vertical direction, the up-down direction, the longitudinal direction, the height direction, and the vertical direction are also referred to as an axial direction, which will be described below. Further, since the left-right direction, the lateral direction, and the horizontal direction determine the diameter of a stirring tank 2 and the stirring impeller 3, the left-right direction, the lateral direction, and the horizontal direction are also referred to as a radial direction.

The stirring device 1 includes the stirring tank 2 that accommodates a fluid to be subjected to stirring (fluid to be stirred) and the stirring impeller 3 that is rotated to stir the fluid in the stirring tank 2. The stirring tank 2 includes a straight cylindrical portion 21 with a circular pipe shape that is provided on an upper side and extends in an axial direction and a bottom portion 22 that is provided on a lower side to be continuous with the straight cylindrical portion 21. An inner peripheral wall or a side wall of the straight cylindrical portion 21 has a circular cross section in a top view (as viewed from the axial direction), and a diameter D of the straight cylindrical portion 21 is also referred to as a tank diameter D of the stirring tank 2 hereinafter. In addition, the cross section of the straight cylindrical portion 21 and/or the stirring tank 2 in a top view may have any noncircular shape. In this case, the tank diameter D of the stirring tank 2 may be a diameter of an inscribed circle of the cross-sectional shape, a diameter of a circumscribed circle of the cross-sectional shape, or an average or intermediate value of the diameters. At least a part of the top of the straight cylindrical portion 21 is open such that the fluid to be stirred can be introduced therein (not shown), and can be closed by a lid or the like during the stirring of the fluid by the stirring impeller 3. In addition, the fluid to be stirred may be supplied into the stirring tank 2 from a fluid supply port such as a supply nozzle that is provided in a side surface of the straight cylindrical portion 21 or the like.

The bottom portion 22 of the stirring tank 2 may be formed in an inverted conical shape or an inverted conical frustum shape in which the diameter decreases downward. In addition, the bottom portion 22 may be formed in a planar shape in which the axial direction is a normal direction. In the example shown in FIG. 1, the bottom portion 22 is formed in a curved shape that bulges downward from a lower end of the straight cylindrical portion 21. The lowermost portion of the stirring tank 2 is formed at the center of the bottom portion 22 by a bulging end of the curved shape. A discharge port (not shown) through which the fluid in the stirring tank 2 can be discharged to the outside of the stirring device 1 may be provided in the lowermost portion of the stirring tank 2. The discharge port may be configured to be openable and closable by a discharge port opening/closing portion such as a valve. When the fluid to be stirred is introduced into and held in the stirring tank 2, when the fluid before discharge is stirred by the stirring impeller 3 to promote mixing or a chemical reaction, or when the concentration is made uniform, the discharge port is closed by a valve or the like controlled to a closed state. In addition, when the fluid to be discharged, which has been uniformized in concentration after the substantial completion of the mixing or the chemical reaction, is discharged while being stirred by the stirring impeller 3 as necessary, the discharge port is opened by a valve or the like controlled to an open state. Further, the stirred fluid may be discharged from an opening in a state where the lid at the top of the stirring tank 2 or the like is opened. In addition, the stirred fluid may be discharged to the outside of the stirring tank 2 from a fluid discharge port, such as a discharge nozzle, that is provided in the side surface of the straight cylindrical portion 21 or the like.

A boundary line between the straight cylindrical portion 21 with a substantially cylindrical shape and the bottom portion 22 with a curved shape in the horizontal direction is also referred to as a tangent line TL. Hereinafter, a distance L between the lowermost portion of the stirring tank 2 (bottom portion 22) and a surface or a liquid level LL of the fluid in the stirring tank 2 in the vertical direction is also referred to as a liquid level height or a reference height. In the present embodiment, a ratio L/D of the liquid level height L of the fluid to be stirred in the stirring tank 2 in the height direction to the tank diameter D of the stirring tank 2 in a radial direction is equal to or greater than 1.2. Since the area of the side wall serving as a heat dissipation surface can be increased, the vertically long stirring tank 2 is suitable for the stirring (chemical reaction) of the fluid to be stirred accompanied by a large heat of reaction. An example of this chemical reaction is polymerization. Further, when the bottom portion 22 is formed in a planar shape, the distance L between the planar bottom portion 22 (bottom plate) and the surface or the liquid level LL of the fluid in the stirring tank 2 in the vertical direction may be used as the liquid level height.

The fluid to be stirred for polymerization includes water and a monomer to be polymerized. An example of the monomer in the present embodiment is a polyol (polyhydric alcohol) that is a raw material for polyurethane or the like as a polymer, but the present invention is not limited thereto. The polyol in which water has been dispersed in the stirring tank 2 is typically mixed with isocyanate at a subsequent stage (not shown) of the stirring device 1 to generate polyurethane. In a typical polymerization reaction, an emulsifier (a surfactant or the like) or a polymerization initiator (a radical generator or the like) is also added to the fluid to be stirred. Physical properties of the fluid to be stirred are optional. However, the fluid to be stirred in the present embodiment has, for example, a density of 1,000 kg/m³ and a viscosity of 1,000 cP. The water in the fluid to be stirred is uniformly dispersed in the polyol by the stirring of the rotating stirring impeller 3, and a homogeneous polymer is obtained through a reaction with the isocyanate.

The stirring impeller 3 is provided to be rotatable about the rotary shaft 30 in the vertical direction that substantially coincides with a center axis of the stirring tank 2 in the vertical direction. A rotation drive unit, such as a motor, that generates rotational power and a rotational power conversion unit, such as a transmission or a reduction gear, that converts the rotational power into a desired number of revolutions (or a rotational speed) or torque are provided above the rotary shaft 30, which is not shown. A lower bearing may be provided below the rotary shaft 30.

A baffle 4 that extends substantially in the axial direction over most of the liquid level height L and that projects substantially in the radial direction toward the center axis of the stirring tank 2 (or the rotary shaft 30 of the stirring impeller 3) is provided in the vicinity of the inner peripheral wall of the straight cylindrical portion 21 in the stirring tank 2. As in the example shown in FIG. 1, a plurality of baffles 4 may be provided along a circumferential direction. Since the fluid to be stirred that has been rotated in the circumferential direction by the stirring impeller 3 hits the baffle 4 which is also called a baffle plate, co-rotation in which the fluid to be stirred rotates along with the stirring impeller 3 due to inertia is prevented. In addition, the baffle 4 should not hinder the rotation of the stirring impeller 3 and is disposed in a radial range outside a rotation region of a plurality of blade portions 31A to 31D which will be described below.

The stirring impeller 3 includes a plurality of (four in the example shown in FIG. 1) blade portions 31A to 31D (hereinafter, collectively referred to as blade portions 31) that are disposed apart from each other in the height direction (axial direction). In the present embodiment, an example in which the blade diameters d of the blade portions 31A to 31D are substantially equal to each other will be described. However, the blade diameters d of the blade portions 31A to 31D may be different from each other. The blade portions 31A to 31D are small stirring impellers including blade portion bodies 32A to 32D (hereinafter, collectively referred to as blade portion bodies 32) with a substantially linear shape or a substantially planar shape that extend in the substantially radial direction from the rotary shaft 30, respectively.

Each of the blade portion bodies 32A to 32D (or connection portions between the blade portion bodies 32A to 32D and the rotary shaft 30) is provided with one or a plurality of (two in the example shown in FIG. 1) blades 33A to 33D (hereinafter, collectively referred to as blades 33) that are rotated about the rotary shaft 30 to generate a flow of the fluid to be stirred having a component in a predetermined direction. The blade 33 is formed of, for example, a substantially rectangular plate and is rotated about the rotary shaft 30 to generate the flow of the fluid to be stirred having an axial direction component (axial flow) since a normal direction of a stirring surface thereof is inclined with respect to both the axial direction and the radial direction. In the example shown in FIG. 1, the blade 33 in each of the blade portions 31 is rotated in a rotation direction R shown in FIG. 1 (a clockwise direction in a top view) integrally with the rotary shaft 30 and the blade portion body 32 to generate downward axial flows FA_{D} to FD_{D} (hereinafter, collectively referred to as a downward axial flow F_{D}) of the fluid to be stirred having a height direction component (downward component) directed toward the bottom portion 22 of the stirring tank 2. Further, in FIG. 1, the blade portion 31, which is an inclined paddle blade in which the normal direction of the stirring surface of one or a plurality of blades 33 is inclined at an acute angle with respect to both the axial direction and the radial direction, is given as an example. However, a part or all of each of the blade portions 31A to 31D may be configured as an axial flow blade such as a hydrofoil.

Since the blade 33 that generates the downward axial flow F_{D} is provided on the central side of the stirring impeller 3 in the radial direction, that is, on the side of the rotary shaft 30, the downward axial flow F_{D} descends along the axial direction in the vicinity of the rotary shaft 30. On the other hand, on the outer peripheral side of the stirring impeller 3 in the radial direction, that is, in the vicinity of the inner peripheral wall of the stirring tank 2 or the baffle 4, the fluid to be stirred that circulates or convects in the stirring tank 2 generates upward axial flows FA_{U} to FD_{U} (hereinafter, collectively referred to as an upward axial flow F_{U}) in a direction opposite to the downward axial flow F_{D} on the central side, which will be described below. The upward axial flow F_{U} has a height direction component (upward component) moving away from the bottom portion 22 of the stirring tank 2 and ascends along the axial direction in the vicinity of the inner peripheral wall of the stirring tank 2 or the baffle 4.

In order to achieve a desired circulation flow, which will be described below, in the stirring tank 2, the dimension (hereinafter, simply referred to as a height) of the blade 33 in the height direction is larger or smaller in the blade portion 31 that is closer to the bottom portion 22 of the stirring tank 2. Specifically, the blades 33 are formed such that the blade 33 closer to the upstream side of the axial flow directly generated by the blade 33 has a smaller height and the blade 33 closer to the downstream side has a larger height. In the example shown in FIG. 1, since the blades 33 directly generate the downward axial flow F_{D}, the blades 33 are formed such that the upper blade 33 closer to the upstream side of the downward axial flow F_{D} has a smaller height (for example, the uppermost blade 33A has the smallest height) and the lower blade 33 closer to the downstream side has a larger height (for example, the lowermost blade 33D has the largest height). In addition, for two blade portions 31 adjacent to each other in the height direction, the heights and the dimensions of the blades 33 in the radial direction may be equal to or different from each other.

In order to achieve a desired circulation flow, which will be described below, in the stirring tank 2, for two blade portions 31 adjacent to each other in the height direction, it is preferable that the ratio of the height of the blade 33 having a smaller height to the height of the blade 33 having a larger height is less than 0.8. Specifically, for two blade portions 31A and 31B adjacent to each other in the height direction, it is preferable that the ratio of the height of the blade 33A having a smaller height to the height of the blade 33B having a larger height is less than 0.8. For two blade portions 31B and 31C adjacent to each other in the height direction, it is preferable that the ratio of the height of the blade 33B having a smaller height to the height of the blade 33C having a larger height is less than 0.8. For two blade portions 31C and 31D adjacent to each other in the height direction, it is preferable that the ratio of the height of the blade 33C having a smaller height to the height of the blade 33D having a larger height is less than 0.8.

The plurality of blade portions 31A to 31D may be disposed at substantially equal intervals along the height direction, or may be disposed at intervals h1 to h3 (hereinafter, collectively referred to as an interval h) that may be different from each other along the height direction as in the example shown in FIG. 1. Each of the intervals h1 to h3 may be adjusted in order to achieve a desired circulation flow, which will be described below, in the stirring tank 2. For example, as described above, as the height of the blade 33 increases toward the bottom portion 22 of the stirring tank 2, the interval h between the respective blade portions 31 in the height direction may increase toward the bottom portion 22 of the stirring tank 2 (for example, h1 ≤ h2 ≤ h3).

In addition, in order to achieve a desired circulation flow, which will be described below, in the stirring tank 2, it is preferable that the distance (that is, the interval h) in the height direction between two blade portions 31 adjacent to each other in the height direction is equal to or less than the blade diameter d of each of the blade portions 31 (h ≤ d).

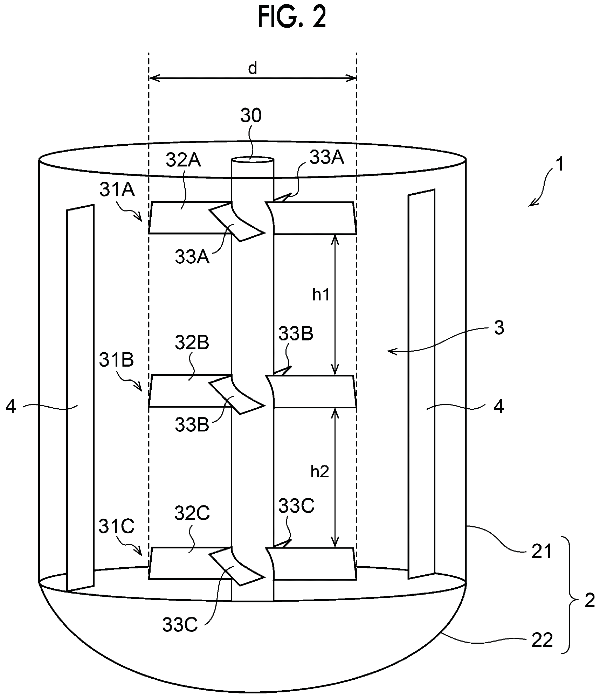

FIG. 2 shows a comparative example of the stirring device 1 shown in FIG. 1. A stirring device 1 is different from the stirring device 1 according to the present embodiment shown in FIG. 1 only in the configuration of the stirring impeller 3. Specifically, in the stirring impeller 3 shown in FIG. 2, the heights of the blades 33A to 33C provided in a plurality of blade portions 31A to 31C are constant regardless of the height in the stirring tank 2. In addition, the number of blade portions 31 (3) in the stirring impeller 3 shown in FIG. 2 is smaller than the number of blade portions 31 (4) in the stirring impeller 3 shown in FIG. 1. Further, in the stirring impeller 3 shown in FIG. 2, the distance (that is, the interval h1 or h2) in the height direction between two blade portions 31 adjacent to each other in the height direction is larger than the blade diameter d of each of the blade portions 31 (h > d).

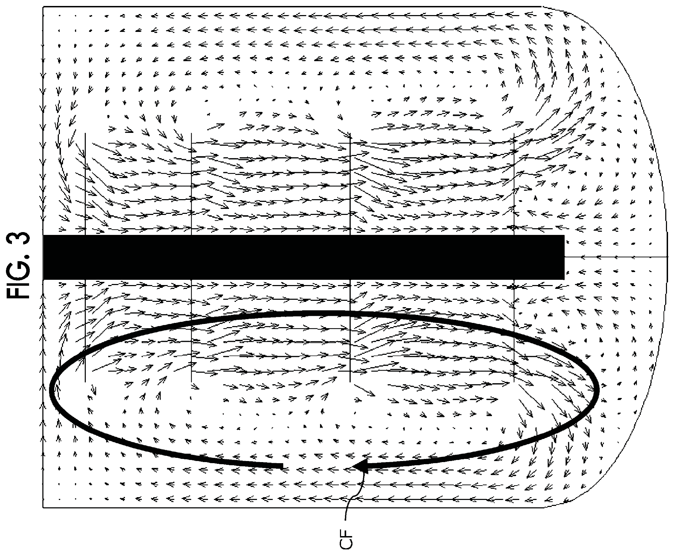

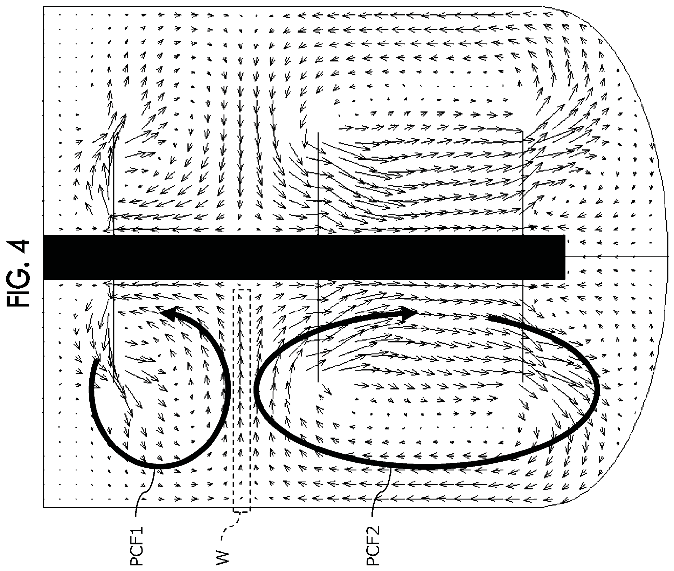

FIGS. 3 and 4 show flow patterns obtained by visualizing the flow of the fluid to be stirred in the stirring tank 2 in the present embodiment (FIG. 1) and the comparative example (FIG. 2), respectively.

In FIG. 4 showing the flow pattern in the comparative example, an upper circulation flow PCF1 that partially circulates in the upper portion of the stirring tank 2 through the upper blade portion 31A and a lower circulation flow PCF2 that partially circulates in the lower portion of the stirring tank 2 through the lower blade portions 31B and 31C are formed. The circulation directions of the upper circulation flow PCF1 and the lower circulation flow PCF2 are opposite to each other. That is, in the vicinity of the rotary shaft 30 (on the inner peripheral side), while the upper circulation flow PCF1 ascends along the axial direction, the lower circulation flow PCF2 descends along the axial direction. On the outer peripheral side of the stirring impeller 3, while the upper circulation flow PCF1 descends along the axial direction, the lower circulation flow PCF2 ascends along the axial direction.

In particular, on the outer peripheral side of the stirring impeller 3, the descending upper circulation flow PCF1 and the ascending lower circulation flow PCF2 collide with each other with substantially the same strength. Therefore, a flow barrier W is formed between the upper blade portion 31A and the lower blade portion 31B. As described above, the interior of the stirring tank 2 is divided into upper and lower parts by the barrier W, resulting in the deterioration of the overall stirring performance of the stirring device 1. In addition, the fluid to be stirred stagnates at the barrier W, which makes it easy for low-specific-gravity monomers or polymers to adhere to the inner peripheral wall of the stirring tank 2 and the baffles 4 in the vicinity of the barrier W.

Independent studies showed that the formation of the barrier W between the blade portions 31 was primarily caused by the constant height of the blades 33 provided in the respective blade portions 31 in the comparative example shown in FIG. 2. That is, since the height of the upper blade 33A that mainly contributes to the formation of the upper circulation flow PCF1 and the height of the lower blades 33B and 33C that mainly contribute to the formation of the lower circulation flow PCF2 are equal to each other, the upper circulation flow PCF1 and the lower circulation flow PCF2 interfere or collide with each other, leading to the formation of the barrier W.

Therefore, in the present embodiment shown in FIG. 1, as described above, the height of the blade 33 is larger in the blade portion 31 that is closer to the bottom portion 22 of the stirring tank 2. As a result, as shown in FIG. 3 showing the flow pattern in the present embodiment, a circulation flow CF that circulates the entire interior of the stirring tank 2 through all of the blade portions 31A to 31D is formed. In the comparative example (FIG. 4), it is considered that, as a result of reducing the height of the upper blade 33A that forms the upper circulation flow PCF1 interfering with the lower circulation flow PCF2, the weakened upper circulation flow PCF1 is incorporated into (or swallowed by) the strong lower circulation flow PCF2, thereby forming one large circulation flow CF. Further, as described above, for two blade portions 31, which are adjacent to each other in the height direction, setting the ratio of the height of the blade 33 having a smaller height to the height of the blade 33 having a larger height to less than 0.8, adjusting the interval h between the respective blade portions 31 in the height direction, and setting the interval h between the respective blade portions 31 in the height direction to be equal to or less than the blade diameter d of each blade portion 31 also contribute to achieving the desired circulation flow CF.

The circulation flow CF descends from the uppermost blade portion 31A toward the lowermost portion 31D along the axial direction in the vicinity of the rotary shaft 30 (on the inner peripheral side) and ascends from the lowermost portion 31D toward the uppermost blade portion 31A along the axial direction on the outer peripheral side of the stirring impeller 3. As described above, the fluid to be stirred in the stirring tank 2 is effectively mixed by the circulation flow CF that circulates widely between the uppermost portion and the lowermost portion in the vertically long stirring tank 2, thereby uniformizing the concentration. In addition, the fluid to be stirred is effectively stirred by the blade portions 31A to 31D through which the circulation flow CF sequentially passes. As a result, the overall stirring performance of the stirring device 1 is significantly improved. In addition, the barrier W is not formed unlike the comparative example (FIG. 4), and the fluid to be stirred is less likely to stagnate between the respective blade portions 31. Therefore, the monomer or the polymer is less likely to adhere to the inner peripheral wall of the stirring tank 2 and the baffle 4. Further, when the stirring device 1 is used for suspension polymerization accompanied by the precipitation of particles, the uniformity of the monomer dispersed in the stirring tank 2 is enhanced. Therefore, homogeneous particles having a small variation in particle diameter are obtained.

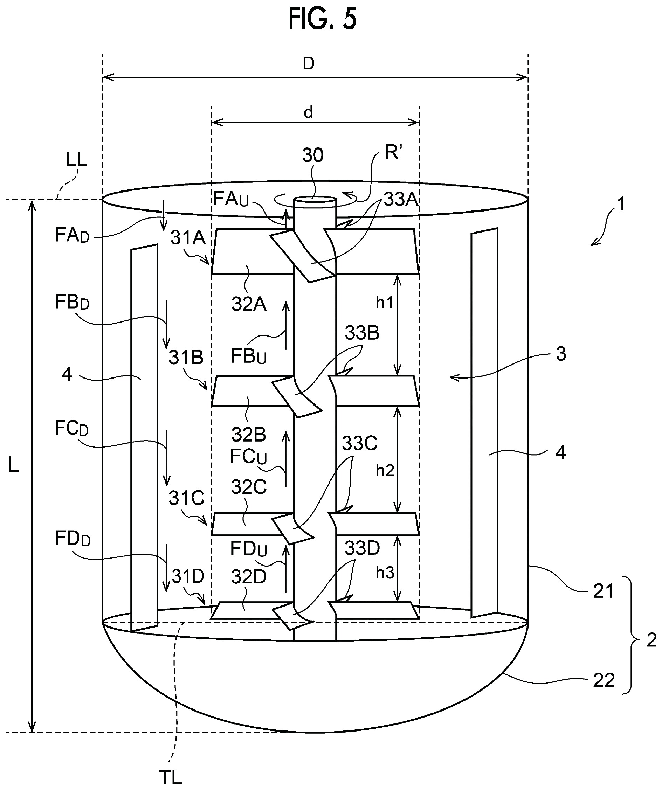

FIG. 5 schematically shows a configuration of a stirring device 1 according to a modification example of the first embodiment shown in FIG. 1. The same components as those in FIG. 1 are denoted by the same reference numerals, and a redundant description thereof will be omitted. The stirring device 1 is different from the stirring device 1 according to the first embodiment shown in FIG. 1 only in the configuration of the stirring impeller 3.

The blades 33 provided in each blade portion 31 of the stirring impeller 3 are rotated in a rotation direction R' (a counterclockwise direction in a top view) shown in FIG. 5 integrally with the rotary shaft 30 and the blade portion body 32, thereby generating upward axial flows FA_{U} to FD_{U} (hereinafter, also collectively referred to as an upward axial flow F_{U}) of the fluid to be stirred having a height direction component (upward component) moving away from the bottom portion 22 of the stirring tank 2.

Since the blade 33 that generates the upward axial flow F_{U} is provided on the central side of the stirring impeller 3 in the radial direction, that is, on the side of the rotary shaft 30, the upward axial flow F_{U} ascends along the axial direction in the vicinity of the rotary shaft 30. On the other hand, on the outer peripheral side of the stirring impeller 3 in the radial direction, that is, in the vicinity of the inner peripheral wall of the stirring tank 2 or the baffle 4, the fluid to be stirred that circulates or convects in the stirring tank 2 generates downward axial flows FA_{D} to FD_{D} (hereinafter, also collectively referred to as a downward axial flow F_{D}) in a direction opposite to the upward axial flow F_{U} on the central side. The downward axial flow F_{D} has a height direction component (downward component) directed toward the bottom portion 22 of the stirring tank 2 and descends along the axial direction in the vicinity of the inner peripheral wall of the stirring tank 2 or the baffle 4.

In order to achieve the same desired circulation flow CF (however, the direction is opposite) as that in FIG. 3 in the stirring tank 2, the blades 33 are formed such that the blade 33 closer to the upstream side of the axial flow directly generated by the blades 33 has a smaller height and the blade 33 closer to the downstream side of the axial flow has a larger height. In the example shown in FIG. 5, since the blades 33 directly generate the upward axial flow F_{U}, the blades 33 are formed such that the lower blade 33 closer to the upstream side of the upward axial flow F_{U} has a smaller height (for example, the lowermost blade 33D has the smallest height) and the upper blade 33 closer to the downstream side of the upward axial flow F_{U} has a larger height (for example, the uppermost blade 33A has the largest height).

In order to achieve the same desired circulation flow CF (however, the direction is opposite) as that shown in FIG. 3 in the stirring tank 2, for two blade portions 31 adjacent to each other in the height direction, it is preferable that the ratio of the height of the blade 33 having a smaller height to the height of the blade 33 having a larger height is less than 0.8. Specifically, for two blade portions 31A and 31B adjacent to each other in the height direction, it is preferable that the ratio of the height of the blade 33B having a smaller height to the height of the blade 33A having a larger height is less than 0.8. For two blade portions 31B and 31C adjacent to each other in the height direction, it is preferable that the ratio of the height of the blade 33C having a smaller height to the height of the blade 33B having a larger height is less than 0.8. For two blade portions 31C and 31D adjacent to each other in the height direction, it is preferable that the ratio of the height of the blade 33D having a smaller height to the height of the blade 33C having a larger height is less than 0.8.

The plurality of blade portions 31A to 31D may be disposed at substantially equal intervals along the height direction, or may be disposed at intervals h1 to h3 (hereinafter, collectively referred to as an interval h) that may be different from each other along the height direction as in the example shown in FIG. 5. Each of the intervals h1 to h3 may be adjusted in order to achieve the same desired circulation flow CF (however, the direction is opposite) as that in FIG. 3 in the stirring tank 2. For example, as described above, as the height of the blade 33 closer to the bottom portion 22 of the stirring tank 2 is smaller, the interval h between the respective blade portions 31 closer to the bottom portion 22 of the stirring tank 2 in the height direction may be smaller (for example, h1 ≥ h2 ≥ h3).

In addition, in order to achieve the same desired circulation flow CF (however, the direction is opposite) as that in FIG. 3 in the stirring tank 2, it is preferable that the distance (that is, the interval h) in the height direction between two blade portions 31 adjacent to each other in the height direction is equal to or less than the blade diameter d of each of the blade portions 31 (h ≤ d).

According to the stirring device 1 shown in FIG. 5, it is possible to achieve the same desired circulation flow CF (however, the direction is opposite) as that in FIG. 3 in the stirring tank 2. The circulation flow CF (not shown) ascends from the lowermost portion 31D toward the uppermost blade portion 31A along the axial direction in the vicinity of the rotary shaft 30 (on the inner peripheral side) and descends from the uppermost blade portion 31A toward the lowermost portion 31D along the axial direction on the outer peripheral side of the stirring impeller 3. As described above, the fluid to be stirred in the stirring tank 2 is effectively mixed by the circulation flow CF that circulates widely between the uppermost portion and the lowermost portion in the vertically long stirring tank 2, thereby uniformizing the concentration. In addition, the fluid to be stirred is effectively stirred by the blade portions 31A to 31D through which the circulation flow CF sequentially passes. As a result, the overall stirring performance of the stirring device 1 is significantly improved. In addition, the barrier W is not formed unlike the comparative example (FIG. 4), and the fluid to be stirred is less likely to stagnate between the respective blade portions 31. Therefore, the monomer or the polymer is less likely to adhere to the inner peripheral wall of the stirring tank 2 and the baffle 4.

The present disclosure has been described above based on the embodiment. Various modifications are possible for combinations of the components and processes in the illustrative embodiment, and it will be apparent to those skilled in the art that these modifications are included within the scope of the present disclosure.

In the first embodiment (FIG. 1), the blade 33 that generates the axial flow has been described as an example. However, the blade 33 that generates the axial flow and the blade 33 that generates the radial flow may be combined (intermixed). For example, the blade portion 31 having the blade 33 that generates the axial flow and the blade portion 31 having the blade 33 that generates the radial flow may be provided in the same stirring impeller 3. In addition, at least one blade portion 31 may be provided with both the blade 33 that generates the axial flow and the blade 33 that generates the radial flow. Further, at least one blade 33 in at least one blade portion 31 may be capable of simultaneously generating both the axial flow and the radial flow. Even in this modification example, it is preferable that the blade 33 has a larger or smaller height in the blade portion 31 closer to the bottom portion 22 of the stirring tank 2.

In addition, the configurations, operations, and functions of the respective devices and methods described in the embodiments can be implemented by hardware resources or software resources, or by cooperation between hardware resources and software resources. For example, a processor, a ROM, a RAM, and various integrated circuits can be used as the hardware resources. For example, programs, such as an operating system and applications, can be used as the software resources.

### Industrial Applicability

The present disclosure relates to a stirring device and the like.

### Reference Signs List

- 1: Stirring device
- 2: Stirring tank
- 3: Stirring impeller
- 21: Straight cylindrical portion
- 22: Bottom portion
- 30: Rotary shaft
- 31: Blade portion
- 33: Blade

## Claims

1. A stirring device comprising:
a stirring impeller that is rotated to stir a fluid to be stirred which is accommodated in a stirring tank,
wherein the stirring impeller includes a plurality of blade portions that are disposed apart from each other in a height direction of the stirring tank,
each of the blade portions includes a blade that is rotated to generate a flow of the fluid to be stirred having a height direction component of the stirring tank, and
a dimension of the blade in the height direction is larger or smaller in the blade portion that is closer to a bottom portion of the stirring tank.

2. The stirring device according to claim 1,
wherein the blade in each of the blade portions is rotated to generate a flow of the fluid to be stirred having a height direction component directed toward the bottom portion of the stirring tank, and
the dimension of the blade in the height direction is larger in the blade portion that is closer to the bottom portion of the stirring tank.

3. The stirring device according to claim 1,
wherein the blade in each of the blade portions is rotated to generate a flow of the fluid to be stirred having a height direction component moving away from the bottom portion of the stirring tank, and
the dimension of the blade in the height direction is smaller in the blade portion that is closer to the bottom portion of the stirring tank.

4. The stirring device according to claim 1,
wherein the blade in each of the blade portions is rotated to generate a flow of the fluid to be stirred having a radial direction component of the stirring tank.

5. The stirring device according to any one of claims 1 to 4,
wherein, for two blade portions adjacent to each other in the height direction, a ratio of the dimension of the blade, which has a smaller dimension in the height direction, to the dimension of the blade, which has a larger dimension in the height direction, in the height direction is less than 0.8.

6. The stirring device according to any one of claims 1 to 4,
wherein a distance in the height direction between two blade portions adjacent to each other in the height direction is equal to or less than a blade diameter of each of the blade portions in a radial direction of the stirring tank.

7. The stirring device according to any one of claims 1 to 4,
wherein a ratio L/D of a liquid level height L of the fluid to be stirred in the stirring tank in the height direction to a tank diameter D of the stirring tank in a radial direction is equal to or greater than 1.2.

8. The stirring device according to any one of claims 1 to 4,
wherein the stirring impeller includes three or more blade portions that are disposed apart from each other in the height direction.

9. The stirring device according to any one of claims 1 to 4,
wherein the fluid to be stirred includes a medium and a monomer, and
polymerization of the monomer is promoted by the stirring of the rotating stirring impeller.

10. A stirring method in a stirring device including a stirring impeller that is rotated to stir a fluid to be stirred which is accommodated in a stirring tank, the stirring impeller including a plurality of blade portions that are disposed apart from each other in a height direction of the stirring tank, the blade portion closer to a bottom portion of the stirring tank including a blade having a larger or smaller dimension in the height direction, the stirring method comprising:
rotating each of the blades to generate a flow of the fluid to be stirred having a height direction component of the stirring tank.
